# DEMANDE DE BREVET EUROPEEN

(11) **EP 3 438 703 A1**
(43) Date de publication de la demande: **06.02.2019**
(21) Numéro de dépôt: 18182461.6
(22) Date de dépôt: 09.07.2018
(51) Int. Cl.: G01S 19/47, G01S 19/51, G01S 5/02, G08G 5/00, G08G 5/04

(54) **PROCÉDÉ ET DISPOSITIF DE SURVEILLANCE DE LA POSITION D'UN AÉRONEF SUIVEUR PAR RAPPORT À UN AÉRONEF MENEUR LORS D'UN VOL EN FORMATION**

(30) Priorité: 03.08.2017 FR 1757453
(71) Demandeur: Airbus Operations S.A.S., 31060 Toulouse (FR)
(72) Inventeur: LEBAS, Julie, 31060 TOULOUSE (FR); ROBIN, Jean-Luc, 31240 SAINT-JEAN (FR); TORRALBA, José, 31330 MERVILLE (FR)
(74) Mandataire: Gicquel, Olivier Yves Gérard

(57) **Abrégé**

- Procédé et dispositif de surveillance de la position d'un aéronef suiveur par rapport à un aéronef meneur lors d'un vol en formation.
- Le dispositif (1) comporte un module (2) de détermination d'une position de l'aéronef meneur (AC1) à partir d'un paramètre de vol provenant d'une première source (4), un module (3) de détermination d'une position de l'aéronef suiveur (AC2) à partir d'un paramètre de vol provenant d'une autre première source (5), des modules (6, 7) de détermination de première et deuxième positions relatives de l'aéronef suiveur (AC2) par rapport à l'aéronef meneur (AC1) à partir de paramètres de vol provenant de secondes sources (9, 8) distinctes des premières sources (4 et 5), un module (10) de comparaison des première et deuxième positions relatives, et un module (11) pour transmettre, en fonction du résultat de la comparaison, à une unité de commande (12) de l'aéronef suiveur (AC2), un ordre de commande permettant soit de garder l'aéronef suiveur (AC2) dans une position optimale, soit de l'amener dans une position de sécurité.

## Description

### DOMAINE TECHNIQUE

La présente invention concerne un procédé et un dispositif de surveillance de la position d'un aéronef suiveur par rapport à un aéronef meneur lors d'un vol en formation.

Un vol en formation comprend au moins deux aéronefs, notamment des avions de transport, à savoir un aéronef meneur (ou leader), et un ou plusieurs aéronefs suiveurs. Les aéronefs suiveurs volent en suivant l'aéronef qu'ils suivent directement (à savoir l'aéronef meneur ou un autre aéronef suiveur) de manière à maintenir un espacement constant entre eux. Dans une application particulière, notamment en vol de croisière, les aéronefs volent les uns derrière les autres au même niveau de vol, avec le même cap et la même vitesse. On peut également prévoir d'appliquer aux aéronefs suiveurs des ordres de commande de vitesse qui sont tels qu'ils permettent auxdits aéronefs suiveurs d'avoir la même position, la même vitesse, et la même accélération qu'avait l'aéronef meneur, à des durées antérieures données.

### ÉTAT DE LA TECHNIQUE

Un vol en formation nécessite la connaissance parfaite des positions relatives des aéronefs entre eux. Pour cela, des systèmes de détermination précise de positions d'aéronefs existent tels que le système de surveillance coopératif utilisant la technologie de surveillance dépendante automatique - diffusion (ADS-B pour « Automatic Dépendent Surveillance - Broadcast » en anglais). Toutefois, la précision apportée n'est pas satisfaisante.

### EXPOSÉ DE L'INVENTION

La présente invention a pour objet de pallier ces inconvénients en proposant un procédé et un dispositif permettant de surveiller la position d'un aéronef suiveur.

À cet effet, l'invention concerne un procédé de surveillance de la position d'un aéronef, dit aéronef suiveur, par rapport à des vortex générés par un aéronef, dit aéronef meneur, qui le précède, lesdits aéronefs meneur et suiveur réalisant un vol en formation.

Selon l'invention, le procédé comporte les étapes suivantes :
- une étape antérieure consistant à amener et maintenir l'aéronef suiveur dans une position dite optimale, dans laquelle ledit aéronef suiveur volant en formation bénéficie d'effets d'au moins l'un des vortex générés par l'aéronef meneur ;
- une première étape de détermination de position, mise en oeuvre par un premier module de détermination de position, consistant à déterminer une position de l'aéronef meneur à partir d'au moins un paramètre de vol provenant d'une première source d'informations de l'aéronef meneur ;
- une deuxième étape de détermination de position, mise en oeuvre par un deuxième module de détermination de position, consistant à déterminer une position de l'aéronef suiveur à partir d'au moins un paramètre de vol provenant d'une première source d'informations de l'aéronef suiveur ;
- une première étape de détermination de position relative, mise en oeuvre par un premier module de position relative, consistant à déterminer une première position relative de l'aéronef suiveur par rapport à l'aéronef meneur à partir de la position de l'aéronef meneur et de la position de l'aéronef suiveur ;
- une deuxième étape de détermination de position relative, mise en oeuvre par un deuxième module de position relative, consistant à déterminer une deuxième position relative de l'aéronef suiveur par rapport à l'aéronef meneur à partir d'au moins un paramètre de vol provenant d'une deuxième source d'informations de l'aéronef meneur et d'une deuxième source d'informations de l'aéronef suiveur, les deuxièmes sources d'informations étant distinctes des premières sources d'informations ;
- une étape de comparaison, mise en oeuvre par un module de comparaison, consistant à comparer la première position relative et la deuxième position relative ;
- une étape de validation, mise en oeuvre par un module de validation, consistant à transmettre à une unité de commande de l'aéronef suiveur un signal représentatif d'un ordre de commande permettant de réaliser au moins l'une des actions suivantes :
   o garder l'aéronef suiveur dans ladite position optimale, si la première position relative et la deuxième position relative sont sensiblement égales,
   o amener l'aéronef suiveur dans une position dite de sécurité, dans laquelle ledit aéronef suiveur n'est pas soumis à des effets des vortex générés par l'aéronef meneur, si la première position relative et la deuxième position relative sont différentes.

Ainsi, grâce à la détermination de la position relative de l'aéronef suiveur par rapport à l'aéronef meneur à partir de deux sources distinctes, il est possible de vérifier de façon certaine la position relative entre les deux aéronefs. Si une incohérence apparaît entre la position relative calculée à partir d'une première source et la position relative calculée à partir de la deuxième source, l'aéronef suiveur est amené dans une position dite de sécurité, dans laquelle il n'est pas soumis à des effets des vortex générés par l'aéronef meneur.

Dans le cadre de l'invention, la position de sécurité est telle que, dans un premier mode de réalisation, l'aéronef suiveur reste en vol en formation, tandis que, dans un second mode de réalisation, le vol en formation est rompu pour cet aéronef suiveur. De préférence, la position de sécurité est déterminée à l'aide d'un modèle de transport de vortex.

En outre, la première étape de détermination de position est précédée d'une première étape de transmission, mise en oeuvre par un premier module de transmission, consistant à transmettre le ou les paramètres de vol de la première source d'informations de l'aéronef meneur au premier module de détermination de position, ledit ou lesdits paramètres de vol étant transmis par l'intermédiaire d'une première liaison de communication.

De plus, la deuxième étape de détermination de position relative est précédée d'une deuxième étape de transmission, mise en oeuvre par un deuxième module de transmission, consistant à transmettre le ou les paramètres de vol de la deuxième source d'informations de l'aéronef meneur au deuxième module de détermination de position relative, ledit ou lesdits paramètres de vol étant transmis par l'intermédiaire d'une deuxième liaison de

Selon une particularité, la deuxième étape de détermination de position relative consiste à déterminer la deuxième position relative longitudinale de l'aéronef suiveur par rapport à l'aéronef meneur, ladite deuxième étape de détermination de position relative comprenant au moins les sous-étapes suivantes :
- une sous-étape de détermination de la différence entre une vitesse de l'aéronef meneur et une vitesse de l'aéronef suiveur, la vitesse de l'aéronef meneur provenant de la deuxième source d'informations de l'aéronef meneur, la vitesse de l'aéronef suiveur provenant de la deuxième source d'informations de l'aéronef suiveur,
- une sous-étape d'intégration dans le temps d'une fonction dépendante de ladite différence déterminée dans la sous-étape de détermination.

Selon une autre particularité, la deuxième étape de détermination de position relative consiste à déterminer la deuxième position relative latérale de l'aéronef suiveur par rapport à l'aéronef meneur, ladite deuxième étape de détermination de position relative consistant à déterminer la position relative latérale à partir de l'intégration d'une fonction dépendant de :
- un angle de roulis et/ou un angle de lacet et/ou un cap de l'aéronef meneur provenant de la deuxième source d'informations de l'aéronef meneur,
- un angle de roulis et/ou un angle de lacet et/ou un cap de l'aéronef suiveur et la vitesse de l'aéronef suiveur provenant de la deuxième source d'informations de l'aéronef suiveur.

L'invention concerne également un dispositif de surveillance de la position d'un aéronef, dit aéronef suiveur, par rapport à des vortex générés par un aéronef, dit aéronef meneur, qui le précède, lesdits aéronefs meneur et suiveur réalisant un vol en formation, l'aéronef suiveur étant amené et maintenu dans une position dite optimale, dans laquelle ledit aéronef suiveur volant en formation bénéficie d'effets d'au moins l'un des vortex générés par l'aéronef meneur.

Selon l'invention, le dispositif comporte :
- un premier module de détermination de position, configuré pour déterminer une position de l'aéronef meneur à partir d'au moins un paramètre de vol provenant d'une première source d'informations de l'aéronef meneur ;
- un deuxième module de détermination de position, configuré pour déterminer une position de l'aéronef suiveur à partir d'au moins un paramètre de vol provenant d'une première source d'informations de l'aéronef suiveur ;
- un premier module de détermination de position relative, configuré pour déterminer une première position relative de l'aéronef suiveur par rapport à l'aéronef meneur à partir de la position de l'aéronef meneur et de la position de l'aéronef suiveur ;
- un deuxième module de détermination de position relative, configuré pour déterminer une deuxième position relative de l'aéronef suiveur par rapport à l'aéronef meneur à partir d'au moins un paramètre de vol provenant d'une deuxième source d'informations de l'aéronef meneur et d'une deuxième source d'informations de l'aéronef suiveur, les deuxièmes sources d'informations étant distinctes des premières sources d'informations ;
- un module de comparaison, configuré pour comparer la première position relative et la deuxième position relative ;
- un module de validation, configuré pour transmettre à une unité de commande de l'aéronef suiveur un signal représentatif d'un ordre de commande permettant de réaliser au moins l'une des actions suivantes :
   ∘ garder l'aéronef suiveur dans ladite position optimale, si la première position relative et la deuxième position relative sont sensiblement égales,
   ∘ amener l'aéronef suiveur dans une position dite de sécurité, dans laquelle ledit aéronef suiveur n'est pas soumis à des effets des vortex générés par l'aéronef meneur, si la première position relative et la deuxième position relative sont différentes.

En outre, le premier module de détermination de position est configuré pour recevoir le ou les paramètres de vol de la première source d'informations de l'aéronef meneur d'un premier module de transmission, configuré pour transmettre le ou les paramètres de vol de la première source d'informations de l'aéronef meneur au premier module de détermination de position, ledit ou lesdits paramètres de vol étant transmis par l'intermédiaire d'une première liaison de communication.

De plus, le deuxième module de détermination de position relative est configuré pour recevoir le ou les paramètres de vol de la deuxième source d'informations de l'aéronef meneur d'un deuxième module de transmission, configuré pour transmettre le ou les paramètres de vol de la deuxième source d'informations de l'aéronef meneur au deuxième module de détermination de position relative, ledit ou lesdits paramètres de vol étant transmis par l'intermédiaire d'une deuxième liaison de communication distincte de la première liaison de communication.

Selon une particularité, le deuxième module de détermination de position relative est configuré pour déterminer la deuxième position relative longitudinale de l'aéronef suiveur par rapport à l'aéronef meneur, ledit deuxième module de détermination de position relative étant configuré pour :
- déterminer la différence entre la vitesse de l'aéronef meneur et la vitesse de l'aéronef suiveur, la vitesse de l'aéronef meneur provenant de la deuxième source d'informations de l'aéronef meneur, la vitesse de l'aéronef suiveur provenant de la deuxième source d'informations de l'aéronef suiveur,
- calculer une intégration dans le temps d'une fonction dépendant de ladite différence.

Selon une autre particularité, le deuxième module de détermination de position relative est configuré pour déterminer la deuxième position relative latérale de l'aéronef suiveur par rapport à l'aéronef meneur, ledit deuxième module de détermination de position relative étant configuré pour déterminer la position relative latérale à partir de l'intégration d'une fonction dépendant de :
- un angle de roulis et/ou un angle de lacet et/ou un cap de l'aéronef meneur provenant de la deuxième source d'informations de l'aéronef meneur,
- un angle de roulis et/ou un angle de lacet et/ou un cap de l'aéronef suiveur et la vitesse de l'aéronef suiveur provenant de la deuxième source d'informations de l'aéronef suiveur.

L'invention concerne également un aéronef, en particulier un avion de transport, comportant un dispositif de surveillance de la position d'un aéronef suiveur par rapport à des vortex générés par un aéronef meneur, qui le précède lors d'un vol en formation, tel que décrit ci-dessus.

### BRÈVE DESCRIPTION DES FIGURES

L'invention, avec ses caractéristiques et avantages, ressortira plus clairement à la lecture de la description faite en référence aux dessins annexés dans lesquels :
- la figure 1 représente schématiquement le dispositif de surveillance,
- la figure 2 représente schématiquement le procédé de surveillance,
- la figure 3 est une représentation schématique d'un vol en formation montrant un aéronef meneur générant des vortex et deux positions possibles pour un aéronef suiveur par rapport à ces vortex.

### DESCRIPTION DÉTAILLÉE

La suite de la description fera référence aux figures citées ci-dessus.

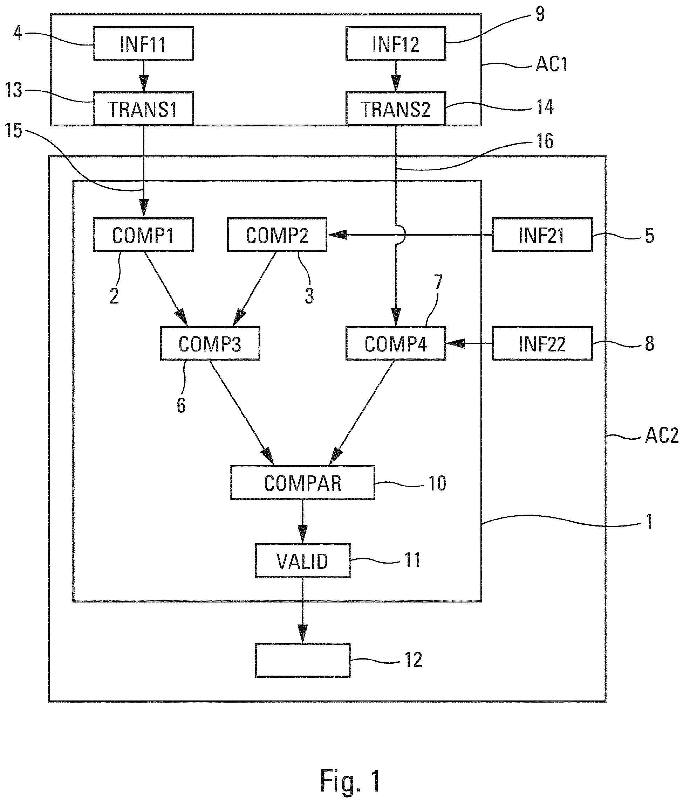

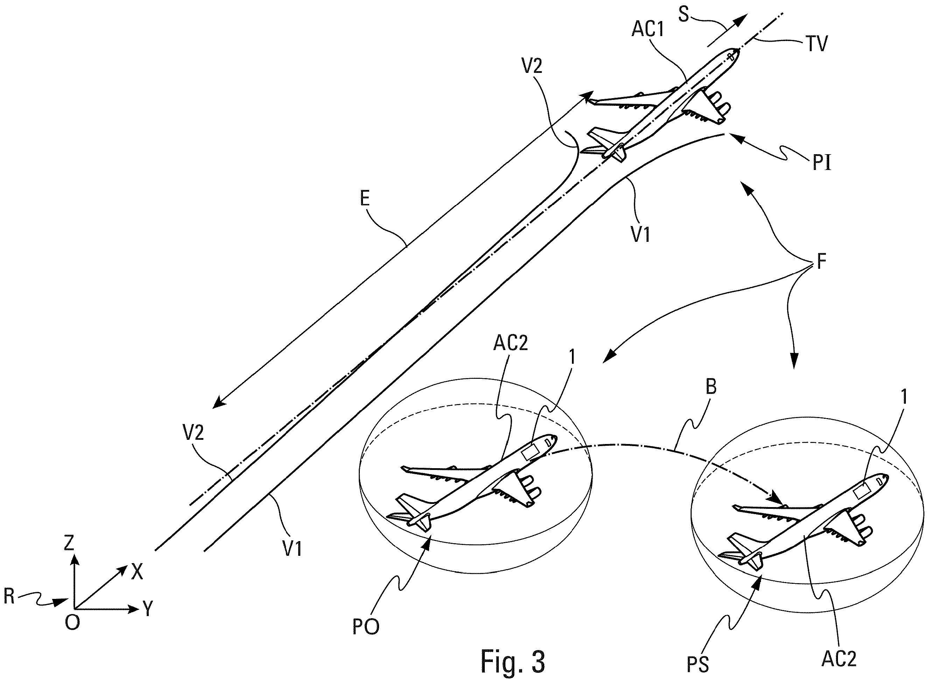

Le dispositif 1 de surveillance de la trajectoire d'un aéronef, dit aéronef suiveur AC2, par rapport à des vortex générés par un aéronef, dit aéronef meneur AC1, qui le précède est illustré schématiquement sur la figure 1. Lesdits aéronefs suiveur et meneur réalisent un vol en formation. Le dispositif 1 est embarqué sur l'aéronef suiveur AC2 comme représenté sur la figure 3. Dans un mode de réalisation particulier, le dispositif 1 fait partie d'une unité (non représentée spécifiquement) de gestion du vol en formation, qui est embarquée sur l'aéronef suiveur AC2. Une telle unité est configurée pour gérer le vol en formation au moins pour l'aéronef suiveur AC2.

De façon usuelle, la formation F comprend l'aéronef meneur AC1 et un ou plusieurs aéronef(s) suiveur(s), à savoir un seul aéronef suiveur AC2 sur l'exemple de la figure 3, qui suivent l'aéronef meneur AC1 (situé à une position PI) de manière à maintenir un espacement constant E entre eux. Dans une application particulière, en particulier en vol de croisière, les aéronefs AC1 et AC2 volent l'un derrière l'autre au même niveau de vol, avec le même cap et la même vitesse.

En outre, l'aéronef suiveur AC2 est légèrement décalé latéralement par rapport à la trajectoire TV suivie par l'aéronef meneur AC1, de manière à se trouver dans une position dite optimale PO pour bénéficier des effets de vortex V1, V2 générés par l'aéronef meneur AC1 comme précisé ci-dessous.

Ces vortex V1 et V2 partent de chacune de ses ailes du fait de la différence de pression entre l'intrados et l'extrados de l'aile, et de la déflexion de l'écoulement d'air vers le bas qui en résulte. Ces vortex sont des tourbillons contrarotatifs et sont caractérisés par un champ de vent globalement ascendant à l'extérieur des tourbillons et globalement descendant entre les tourbillons. A partir des ailes, les vortex tendent d'abord à se rapprocher l'un de l'autre, puis à maintenir une distance plus ou moins constante entre eux tout en perdant de l'altitude par rapport à l'altitude à laquelle ils ont été générés. Du fait de cette configuration des vortex, il est intéressant, pour l'aéronef suiveur qui suit l'aéronef meneur générant les vortex, d'être amené dans la position optimale PO où il peut profiter des vents ascendants afin de réduire sa consommation de carburant. La position optimale PO peut être déterminée à l'aide d'un modèle de signature de vortex.

Pour faciliter la description, la figure 3 montre un repère R orthonormé, formé de trois axes (ou directions) X, Y et Z orthogonaux entre eux, qui sont tels que :
- X est l'axe longitudinal du fuselage de l'aéronef meneur AC1 orienté positivement dans le sens d'avancement S de l'aéronef meneur AC1 ;
- Z est un axe vertical qui forme avec l'axe X un plan correspondant au plan vertical de symétrie de l'aéronef meneur AC1 ; et
- Y est un axe transversal qui est orthogonal auxdits axes X et Z.

Selon l'invention, le dispositif 1 comporte :
- un module de détermination de position COMP1 2 (COMP pour « computional module » en anglais), configuré pour déterminer une position de l'aéronef meneur AC1 à partir d'au moins un paramètre de vol provenant d'une source d'informations INF11 (INF pour « information source» en anglais) 4 de l'aéronef meneur AC1 ;
- un module de détermination de position COMP2 3, configuré pour déterminer une position de l'aéronef suiveur AC2 à partir d'au moins un paramètre de vol provenant d'une source d'informations INF21 5 de l'aéronef suiveur AC2 ;
- un module de position relative COMP3 6, configuré pour déterminer une première position relative de l'aéronef suiveur AC2 par rapport à l'aéronef meneur AC1 à partir de la position de l'aéronef meneur AC1 et de la position de l'aéronef suiveur AC2 ;
- un module de position relative COMP4 7, configuré pour déterminer une deuxième position relative de l'aéronef suiveur AC2 par rapport à l'aéronef meneur AC1 à partir d'au moins un paramètre de vol provenant d'une source d'informations INF12 9 de l'aéronef meneur AC1 et d'une source d'informations INF22 8 de l'aéronef suiveur AC2, les sources d'informations 8 et 9 étant distinctes des sources d'informations 4 et 5.

La source d'informations 4 de l'aéronef meneur AC1 peut correspondre à un système de géo-positionnement par satellites embarqué dans l'aéronef meneur AC1, par exemple un système GPS (pour « Global Positioning System » en anglais). La source d'informations 5 de l'aéronef suiveur AC2 peut aussi correspondre à un système de géo-positionnement par satellites embarqué dans l'aéronef suiveur AC2.

La source d'informations 9 de l'aéronef meneur AC1 peut correspondre à un système embarqué dans l'aéronef meneur AC1 qui fournit des informations sur les référents inertiels de l'aéronef meneur AC1 ainsi que sur des données aérodynamique de l'aéronef meneur AC1. Par exemple, ledit système embarqué correspond à un système ADIRU (pour « Air Data and Inertial Reference Unit » en anglais). La source d'informations 8 de l'aéronef suiveur AC2 peut aussi correspondre à un système ADIRU embarqué sur l'aéronef suiveur AC2.

Le dispositif 1 comporte également :
- un module de comparaison COMPAR (COMPAR pour « comparison module » en anglais) 10, configuré pour comparer la première position relative et la deuxième position relative ; et
- un module de validation VALID (VALID pour « validation module » en anglais) 11, configuré pour transmettre à une unité de commande 12 de l'aéronef suiveur AC2 un signal représentatif d'un ordre de commande permettant de réaliser au moins l'une des actions suivantes :
   o garder l'aéronef suiveur AC2 dans ladite position optimale PO (dans laquelle il bénéficie des effets de vortex V1, V2 générés par l'aéronef meneur AC1), si la première position relative et la deuxième position relative sont sensiblement égales (à une marge prédéterminée près),
   o amener l'aéronef suiveur AC2 dans une position dite de sécurité PS, dans laquelle ledit aéronef suiveur AC2 n'est pas soumis à des effets des vortex V1, V2 générés par l'aéronef meneur AC1, si la première position relative et la deuxième position relative sont différentes.

La position de sécurité PS est telle que, dans un premier mode de réalisation, l'aéronef suiveur AC2 reste en vol en formation, tandis que, dans un second mode de réalisation, le vol en formation est rompu pour cet aéronef suiveur AC2. La position de sécurité PS peut être déterminée à l'aide d'un modèle de transport de vortex.

L'unité de commande 12 comprend tous les moyens usuels nécessaires pour réaliser un pilotage, manuel ou automatique, de l'aéronef suiveur AC2. Cette unité de commande 12 n'est pas décrite davantage dans la description suivante.

Ainsi, lors du vol en formation F, dans la situation normale, et tant que cela reste possible, l'aéronef suiveur AC2 est maintenu dans la position optimale PO où il bénéficie à la fois du vol en formation F et des effets positifs du vortex V1.

Quand cela est rendu nécessaire par la surveillance, l'aéronef suiveur AC2 est amené (rapidement) dans la position de sécurité PS, comme illustré par une flèche B sur la figure 3, avec (selon le mode de réalisation) une rupture ou non du vol en formation F.

Selon un mode de réalisation, le premier module de détermination de position 2 est configuré pour recevoir le ou les paramètres de vol de la première source d'informations 4 de l'aéronef meneur AC1 d'un premier module de transmission TRANS1 (TRANS pour « transmission module » en anglais) 13 qui est configuré pour transmettre le ou les paramètres de vol de la source d'informations 4 de l'aéronef meneur AC1 au premier module de détermination de position 2. Ledit ou lesdits paramètres de vol sont transmis par l'intermédiaire d'une liaison de communication 15. Cette liaison de communication 15 peut être comprise dans un système de surveillance coopératif utilisant la technologie de surveillance dépendante automatique - diffusion (ADS-B pour « Automatic Dépendent Surveillance - Broadcast » en anglais). Cette technologie est basée sur la transmission, en mode S qui est un mode parmi les modes d'interrogation de transpondeur aéronautique sur la fréquence 1090 MHz, d'un message contenant un certain nombre de paramètres de l'aéronef.

Avantageusement, le deuxième module de détermination de position relative 7 est configuré pour recevoir le ou les paramètres de vol de la deuxième source d'informations 9 de l'aéronef meneur AC1 d'un module de transmission TRANS2 14, configuré pour transmettre le ou les paramètres de vol de la source d'informations 9 de l'aéronef meneur AC1 au module de détermination de position relative 7, ledit ou lesdits paramètres de vol étant transmis par l'intermédiaire d'une liaison de communication 16. La liaison de communication 16 est distincte de la liaison de communication 15. Cette liaison de communication 16 peut être comprise dans un système de liaison croisée renforcée (EHS pour « Enhanced Surveillance ») fonctionnant également en mode S.

D'autres liaisons de communication peuvent être utilisées comme liaisons de communication 15 et 16 distinctes l'une de l'autre.

Dans un mode de réalisation, le module de détermination de position relative 7 est configuré pour déterminer la deuxième position relative longitudinale de l'aéronef suiveur AC2 par rapport à l'aéronef meneur AC1.

Pour cela, ledit module de détermination de position relative 7 est configuré pour :
- déterminer la différence entre une vitesse de l'aéronef meneur AC1 et une vitesse de l'aéronef suiveur AC2,
- calculer une intégration dans le temps d'une fonction dépendant de ladite différence.

La vitesse de l'aéronef meneur AC1 provient de la source d'informations 9 de l'aéronef meneur AC1. La vitesse de l'aéronef suiveur AC2 provient de la source d'informations 8 de l'aéronef suiveur AC2.

Chacune de ces vitesses (de l'aéronef meneur AC1 et de l'aéronef suiveur AC2) peut correspondre à une vitesse air ou une vitesse sol. Avantageusement, le résultat de l'intégration de ladite fonction comprend également une constante d'intégration correspondant à une dérive lente due à la basse fréquence de la liaison de communication 16.

Selon un mode de réalisation, le module de détermination de position relative 7 est configuré pour déterminer la deuxième position relative latérale de l'aéronef suiveur AC2 par rapport à l'aéronef meneur AC1.

Pour cela, ledit module de détermination de position relative 7 est configuré pour déterminer la position relative latérale à partir de l'intégration d'une fonction dépendant de :
∘ un angle de roulis et/ou un angle de lacet et/ou un cap de l'aéronef meneur AC1 provenant de la source d'informations 9 de l'aéronef meneur AC1,
∘ un angle de roulis et/ou un angle de lacet et/ou un cap de l'aéronef suiveur et la vitesse de l'aéronef suiveur AC2 provenant de la source d'informations 8 de l'aéronef suiveur AC2.

Avantageusement, le résultat de l'intégration de ladite fonction comprend également une constante d'intégration correspondant à une dérive lente due à la basse fréquence de la liaison de communication 16.

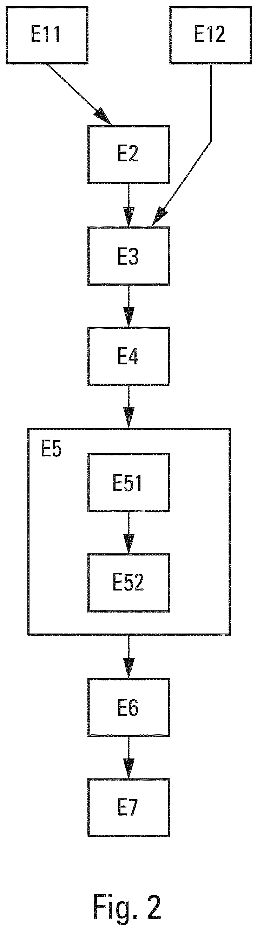

Le procédé de surveillance de la position d'un aéronef suiveur AC2, par rapport à des vortex V1, V2 générés par un aéronef meneur AC1 est illustré schématiquement sur la figure 2. L'aéronef suiveur AC2 et l'aéronef meneur AC1 volent en formation, et l'aéronef suiveur AC2 est dans la position optimale PO, dans laquelle il a été amené dans une étape antérieure aux étapes représentées sur la figure 2.

Le procédé comporte les étapes suivantes :
- une étape E2 de détermination de position, mise en oeuvre par le module de détermination de position 2, consistant à déterminer une position de l'aéronef meneur AC1 à partir d'au moins un paramètre de vol provenant de la source d'informations 4 de l'aéronef meneur AC1 ;
- une étape E3 de détermination de position, mise en oeuvre par le module de détermination de position 3, consistant à déterminer une position de l'aéronef suiveur AC2 à partir d'au moins un paramètre de vol provenant de la source d'informations 5 de l'aéronef suiveur AC2 ;
- une étape E4 de détermination de position relative, mise en oeuvre par le module de position relative 6, consistant à déterminer une première position relative de l'aéronef suiveur AC2 par rapport à l'aéronef meneur AC1 à partir de la position de l'aéronef meneur AC1 et de la position de l'aéronef suiveur AC2 ;
- une étape E5 de détermination de position relative, mise en oeuvre par le module de position relative 7, consistant à déterminer une deuxième position relative de l'aéronef suiveur AC2 par rapport à l'aéronef meneur AC1 à partir d'au moins un paramètre de vol provenant de la source d'informations 9 de l'aéronef meneur AC1 et de la source d'informations 8 de l'aéronef suiveur AC2, les sources d'informations 8 et 9 étant distinctes des sources d'informations 4 et 5 ;
- une étape E6 de comparaison, mise en oeuvre par le module de comparaison 10, consistant à comparer la première position relative et la deuxième position relative ;
- une étape 11 de validation, mise en oeuvre par le module de validation 11, consistant à transmettre à l'unité de commande 12 de l'aéronef suiveur AC2 un signal représentatif d'un ordre de commande permettant de réaliser au moins l'une des actions suivantes :
   ∘ garder l'aéronef suiveur AC2 dans la position optimale PO (dans laquelle il bénéficie des effets de vortex V1, V2 générés par l'aéronef meneur AC1), si la première position relative (calculée à l'étape E4) et la deuxième position relative(calculée à l'étape E5) sont sensiblement égales,
   ∘ amener l'aéronef suiveur AC2 dans la position de sécurité PS (avec ou sans rupture du vol en formation), dans laquelle ledit aéronef suiveur AC2 n'est pas soumis à des effets des vortex V1, V2 générés par l'aéronef meneur AC1, si la première position relative (calculée à l'étape E4) et la deuxième position relative (calculée à l'étape E5) sont différentes.

L'étape E2 de détermination de position peut être précédée d'une étape E11 de transmission, mise en oeuvre par le module de transmission 13, consistant à transmettre le ou les paramètres de vol de la source d'informations 4 de l'aéronef meneur AC1 au module de détermination de position 2. Ledit ou lesdits paramètres de vol sont transmis par l'intermédiaire de la liaison de communication 15.

L'étape E5 de détermination de position relative peut être précédée d'une étape E12 de transmission, mise en oeuvre par le module de transmission 14, consistant à transmettre le ou les paramètres de vol de la source d'informations 9 de l'aéronef meneur AC1 au module de détermination de position relative 7. Ledit ou lesdits paramètres de vol sont transmis par l'intermédiaire de la liaison de communication 16 distincte de la liaison de communication 15.

L'étape E5 de détermination de position relative peut consister à déterminer la deuxième position relative longitudinale de l'aéronef suiveur AC2 par rapport à l'aéronef meneur AC1, ladite étape E5 de détermination de position relative comprenant au moins les sous-étapes suivantes :
- une sous-étape E51 de détermination de la différence entre une vitesse de l'aéronef meneur AC1 et une vitesse de l'aéronef suiveur AC2, la vitesse de l'aéronef meneur AC1 provenant de la source d'informations 9 de l'aéronef meneur AC1, la vitesse de l'aéronef suiveur AC2 provenant de la source d'informations 8 de l'aéronef suiveur AC2,
- une sous-étape E52 d'intégration dans le temps d'une fonction dépendante de ladite différence déterminée dans la sous-étape E51 de détermination.

L'étape E5 de détermination de position relative peut consister à déterminer la deuxième position relative latérale de l'aéronef suiveur AC2 par rapport à l'aéronef meneur AC1, ladite étape E5 de détermination de position relative consistant à déterminer la position relative latérale à partir de l'intégration d'une fonction dépendant de :
∘ un angle de roulis et/ou un angle de lacet et/ou un cap de l'aéronef meneur AC1 provenant de la source d'informations 9 de l'aéronef meneur AC1,
∘ un angle de roulis et/ou un angle de lacet et/ou un cap de l'aéronef suiveur AC2 et la vitesse de l'aéronef suiveur AC2 provenant de la source d'informations 8 de l'aéronef suiveur AC2.

## Revendications

1. Procédé de surveillance de la position d'un aéronef, dit aéronef suiveur (AC2), par rapport à des vortex (V1, V2) générés par un aéronef, dit aéronef meneur (AC1), qui le précède, lesdits aéronefs meneur (AC1) et suiveur (AC2) réalisant un vol en formation (F),
**caractérisé en ce qu'**il comporte les étapes suivantes :
- une étape antérieure consistant à amener et maintenir l'aéronef suiveur (AC2) dans une position dite optimale (PO), dans laquelle ledit aéronef suiveur (AC2) volant en formation bénéficie d'effets d'au moins l'un des vortex (V1, V2) générés par l'aéronef meneur (AC1);
- une première étape (E2) de détermination de position, mise en oeuvre par un premier module de détermination de position (2), consistant à déterminer une position (PI) de l'aéronef meneur (AC1) à partir d'au moins un paramètre de vol provenant d'une première source d'informations (4) de l'aéronef meneur (AC1);
- une deuxième étape (E3) de détermination de position, mise en oeuvre par un deuxième module de détermination de position (3), consistant à déterminer une position (PO, PS) de l'aéronef suiveur (AC2) à partir d'au moins un paramètre de vol provenant d'une première source d'informations (5) de l'aéronef suiveur (AC2) ;
- une première étape (E4) de détermination de position relative, mise en oeuvre par un premier module de position relative (6), consistant à déterminer une première position relative de l'aéronef suiveur (AC2) par rapport à l'aéronef meneur (AC1) à partir de la position (PI) de l'aéronef meneur (AC1) et de la position (PO, PS) de l'aéronef suiveur (AC2) ;
- une deuxième étape (E5) de détermination de position relative, mise en oeuvre par un deuxième module de position relative (7), consistant à déterminer une deuxième position relative de l'aéronef suiveur (AC2) par rapport à l'aéronef meneur (AC1) à partir d'au moins un paramètre de vol provenant d'une deuxième source d'informations (9) de l'aéronef meneur (AC1) et d'une deuxième source d'informations (8) de l'aéronef suiveur (AC2), les deuxièmes sources d'informations (8, 9) étant distinctes des premières sources d'informations (4, 5) ;
- une étape (E6) de comparaison, mise en oeuvre par un module de comparaison (10), consistant à comparer la première position relative et la deuxième position relative ;
- une étape (E7) de validation, mise en oeuvre par un module de validation (11), consistant à transmettre à une unité de commande (12) de l'aéronef suiveur (AC2) un signal représentatif d'un ordre de commande permettant de réaliser au moins l'une des actions suivantes :
∘ garder l'aéronef suiveur (AC2) dans ladite position optimale (PO), si la première position relative et la deuxième position relative sont égales,
∘ amener l'aéronef suiveur (AC2) dans une position dite de sécurité (PS), dans laquelle ledit aéronef suiveur (AC2) n'est pas soumis à des effets des vortex (V1, V2) générés par l'aéronef meneur (AC1), si la première position relative et la deuxième position relative sont différentes.

2. Procédé selon la revendication 1,
**caractérisé en ce que** la première étape (E2) de détermination de position est précédée d'une première étape (E11) de transmission, mise en oeuvre par un premier module de transmission (13), consistant à transmettre le ou les paramètres de vol de la première source d'informations (4) de l'aéronef meneur (AC1) au premier module de détermination de position (2), ledit ou lesdits paramètres de vol étant transmis par l'intermédiaire d'une première liaison de communication (15).

3. Procédé selon l'une des revendications 1 ou 2,
**caractérisé en ce que** la deuxième étape (E5) de détermination de position relative est précédée d'une deuxième étape (E12) de transmission, mise en oeuvre par un deuxième module de transmission (14), consistant à transmettre le ou les paramètres de vol de la deuxième source d'informations (9) de l'aéronef meneur (AC1) au deuxième module de détermination de position relative (7), ledit ou lesdits paramètres de vol étant transmis par l'intermédiaire d'une deuxième liaison de communication (16) distincte de la première liaison de communication (15).

4. Procédé selon l'une quelconque des revendications 1 à 3,
**caractérisé en ce que** la position de sécurité (PS) est telle que l'aéronef suiveur (AC2) reste en vol en formation (F).

5. Procédé selon l'une quelconque des revendications 1 à 3,
**caractérisé en ce que** la position de sécurité (PS) est telle que l'aéronef suiveur (AC2) rompt le vol en formation (F).

6. Procédé selon l'une quelconque des revendications 1 à 5,
**caractérisé en ce que** la deuxième étape (E5) de détermination de position relative consiste à déterminer la deuxième position relative longitudinale de l'aéronef suiveur (AC2) par rapport à l'aéronef meneur (AC1), ladite deuxième étape (E5) de détermination de position relative comprenant au moins les sous-étapes suivantes :
- une sous-étape (E51) de détermination de la différence entre une vitesse de l'aéronef meneur et une vitesse de l'aéronef suiveur (AC2), la vitesse de l'aéronef meneur (AC1) provenant de la deuxième source d'informations (9) de l'aéronef meneur (AC1), la vitesse de l'aéronef suiveur (AC2) provenant de la deuxième source d'informations (8) de l'aéronef suiveur (AC2),
- une sous-étape (E52) d'intégration dans le temps d'une fonction dépendante de ladite différence déterminée dans la sous-étape (E51) de détermination.

7. Procédé selon l'une quelconque des revendications 1 à 5,
**caractérisé en ce que** la deuxième étape (E5) de détermination de position relative consiste à déterminer la deuxième position relative latérale de l'aéronef suiveur (AC2) par rapport à l'aéronef meneur (AC1), ladite deuxième étape (E5) de détermination de position relative consistant à déterminer la position relative latérale à partir de l'intégration d'une fonction dépendant de :
- un angle de roulis et/ou un angle de lacet et/ou un cap de l'aéronef meneur (AC1) provenant de la deuxième source d'informations (9) de l'aéronef meneur (AC1),
- un angle de roulis et/ou un angle de lacet et/ou un cap de l'aéronef suiveur (AC2) et la vitesse de l'aéronef suiveur (AC2) provenant de la deuxième source d'informations (8) de l'aéronef suiveur (AC2).

8. Dispositif de surveillance de la position d'un aéronef, dit aéronef suiveur (AC2), par rapport à des vortex (V1, V2) générés par un aéronef, dit aéronef meneur (AC1), qui le précède, lesdits aéronefs meneur (AC1) et suiveur (AC2) réalisant un vol en formation (F), l'aéronef suiveur (AC2) étant amené et maintenu dans une position dite optimale (PO), dans laquelle ledit aéronef suiveur (AC2) volant en formation bénéficie d'effets d'au moins l'un des vortex (V1, V2) générés par l'aéronef meneur (AC1),
**caractérisé en ce qu'**il comporte :
- un premier module de détermination de position (2), configuré pour déterminer une position (PI) de l'aéronef meneur (AC1) à partir d'au moins un paramètre de vol provenant d'une première source d'informations (4) de l'aéronef meneur (AC1);
- un deuxième module de détermination de position (3), configuré pour déterminer une position de l'aéronef suiveur (AC2) à partir d'au moins un paramètre de vol provenant d'une première source d'informations (5) de l'aéronef suiveur (AC2) ;
- un premier module de détermination de position relative (6), configuré pour déterminer une première position relative de l'aéronef suiveur (AC2) par rapport à l'aéronef meneur (AC1) à partir de la position de l'aéronef meneur (AC1) et de la position de l'aéronef suiveur (AC2) ;
- un deuxième module de détermination de position relative (7), configuré pour déterminer une deuxième position relative de l'aéronef suiveur (AC2) par rapport à l'aéronef meneur (AC1) à partir d'au moins un paramètre de vol provenant d'une deuxième source d'informations (9) de l'aéronef meneur (AC1) et d'une deuxième source d'informations (8) de l'aéronef suiveur (AC2), les deuxièmes sources d'informations (8, 9) étant distinctes des premières sources d'informations (4, 5) ;
- un module de comparaison (10), configuré pour comparer la première position relative et la deuxième position relative ;
- un module de validation (11), configuré pour transmettre à une unité de commande (12) de l'aéronef suiveur (AC2) un signal représentatif d'un ordre de commande permettant de réaliser au moins l'une des actions suivantes :
∘ garder l'aéronef suiveur (AC2) dans ladite position optimale (PO), si la première position relative et la deuxième position relative sont égales,
∘ amener l'aéronef suiveur (AC2) dans une position dite de sécurité (PS), dans laquelle ledit aéronef suiveur (AC2) n'est pas soumis à des effets des vortex (V1, V2) générés par l'aéronef meneur (AC1), si la première position relative et la deuxième position relative sont différentes.

9. Dispositif selon la revendication 8,
**caractérisé en ce que** le premier module de détermination de position (2) est configuré pour recevoir le ou les paramètres de vol de la première source d'informations (4) de l'aéronef meneur (AC1) d'un premier module de transmission (13), configuré pour transmettre le ou les paramètres de vol de la première source d'informations (4) de l'aéronef meneur (AC1) au premier module de détermination de position (2), ledit ou lesdits paramètres de vol étant transmis par l'intermédiaire d'une première liaison de communication (15).

10. Dispositif selon l'une des revendications 8 ou 9,
**caractérisé en ce que** le deuxième module de détermination de position relative (7) est configuré pour recevoir le ou les paramètres de vol de la deuxième source d'informations (9) de l'aéronef meneur (AC1) d'un deuxième module de transmission (14), configuré pour transmettre le ou les paramètres de vol de la deuxième source d'informations (9) de l'aéronef meneur (AC1) au deuxième module de détermination de position relative (7), ledit ou lesdits paramètres de vol étant transmis par l'intermédiaire d'une deuxième liaison de communication (16) distincte de la première liaison de communication (15).

11. Dispositif selon l'une quelconque des revendications 8 à 10,
**caractérisé en ce que** le deuxième module de détermination de position relative (7) est configuré pour déterminer la deuxième position relative longitudinale de l'aéronef suiveur (AC2) par rapport à l'aéronef meneur (AC1), ledit deuxième module de détermination de position relative (7) étant configuré pour :
- déterminer la différence entre la vitesse de l'aéronef meneur (AC1) et la vitesse de l'aéronef suiveur (AC2), la vitesse de l'aéronef meneur (AC1) provenant de la deuxième source d'informations (9) de l'aéronef meneur (AC1), la vitesse de l'aéronef suiveur (AC2) provenant de la deuxième source d'informations (8) de l'aéronef suiveur (AC2),
- calculer une intégration dans le temps d'une fonction dépendant de ladite différence.

12. Dispositif selon l'une quelconque des revendications 8 à 10,
**caractérisé en ce que** le deuxième module de détermination de position relative (7) est configuré pour déterminer la deuxième position relative latérale l'aéronef suiveur (AC2) par rapport à l'aéronef meneur (AC1), ledit deuxième module de détermination de position relative (7) étant configuré pour déterminer la position relative latérale à partir de l'intégration d'une fonction dépendant de :
- un angle de roulis et/ou un angle de lacet et/ou un cap de l'aéronef meneur (AC1) provenant de la deuxième source d'informations (9) de l'aéronef meneur (AC1),
- un angle de roulis et/ou un angle de lacet et/ou un cap de l'aéronef suiveur (AC2) et la vitesse de l'aéronef suiveur (AC2) provenant de la deuxième source d'informations (8) de l'aéronef suiveur (AC2).

13. Aéronef,
**caractérisé en ce qu'**il comporte un dispositif de surveillance de la position d'un aéronef (1), selon sous l'une quelconque des revendications 8 à 12.
